# DEMANDE DE BREVET EUROPEEN

(11) **EP 1 426 553 A1**
(43) Date de publication de la demande: **09.06.2004**
(21) Numéro de dépôt: 02447236.7
(22) Date de dépôt: 03.12.2002
(51) Int. Cl.: F01D 5/14

(54) **Réduction de la masse d'aubes mobiles**

(71) Demandeur: Techspace Aero S.A., 4041 Milmort (BE)
(72) Inventeur: Radovcic, Yvan, 4100 Seraing (BE); Bos, Mathieu, 3520 Zonhoven (BE); Verhelst, Damien, 4000 Liege (BE); Ory, Caroline, 4000 Liege (BE)
(74) Mandataire: Van Malderen, Michel

(57) **Abrégé**

Une aube mobile (1) allégée dans la masse est présentée. Cette aube mobile est disposée au moyen d'un pied (2) sur une couronne rotorique appartenant à un tambour de turbocompresseur (20), caractérisée en ce que l'allègement résulte de l'usinage de trous, rainures ou évidements (4,4',4'',5) dans le pied d'une aube pleine.

## Description

### Objet de l'invention

La présente invention se rapporte à la réalisation d'aubes mobiles de masse réduite destinées à équiper des étages rotoriques de turbocompresseurs, utilisés notamment dans les moteurs à double corps, les turbosoufflantes et les turboréacteurs dans le secteur aéronautique.

Plus généralement, l'invention est utilisable dans des domaines d'application nécessitant le montage de plusieurs pièces identiques sur une couronne (ou un tambour) en rotation, le contact des pièces avec ladite couronne étant assuré principalement par la force centrifuge.

### Etat de la technique

Les turbocompresseurs, qui peuvent être du type basse pression ou haute pression, sont, pour l'essentiel, constitués d'une succession d'étages rotoriques d'aubes mobiles en alternance avec des étages statoriques d'aubes fixes, également dénommés étages redresseurs.

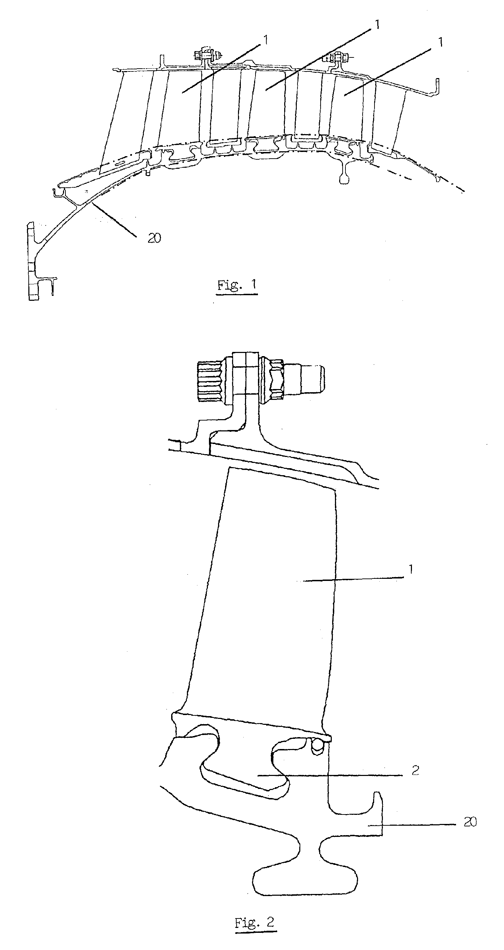

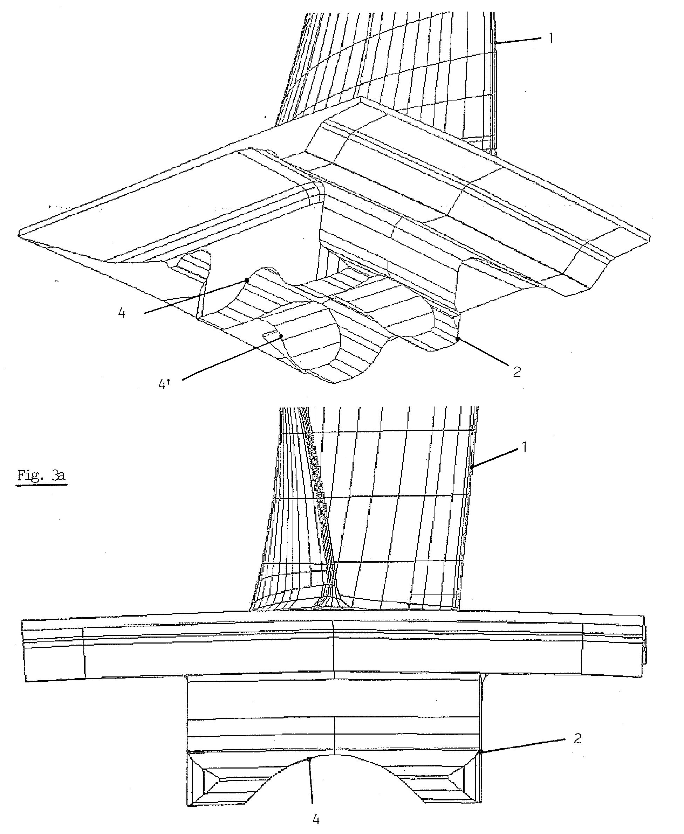

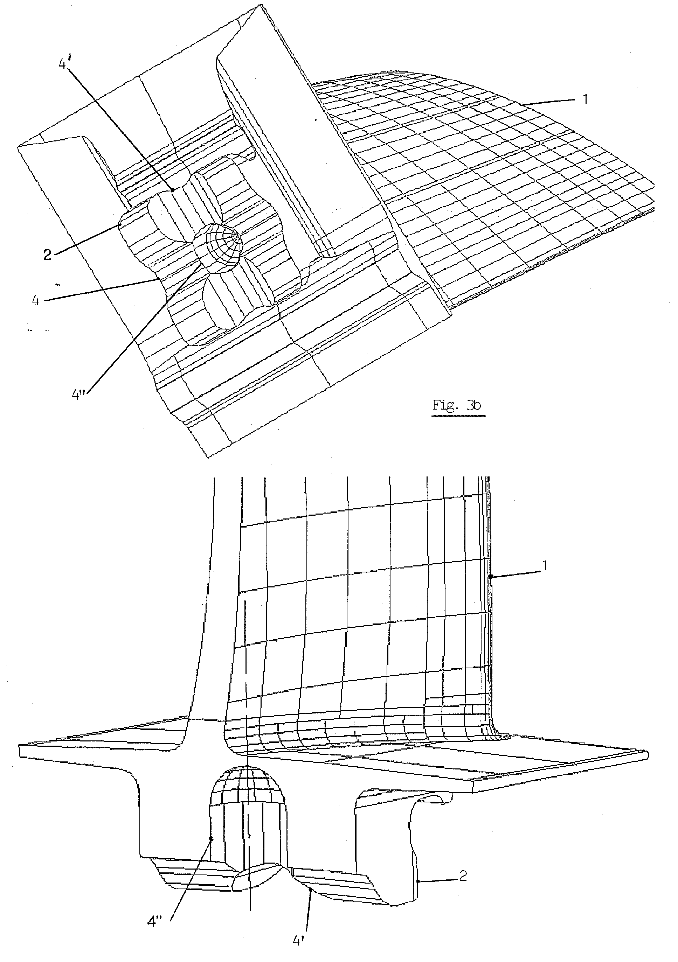

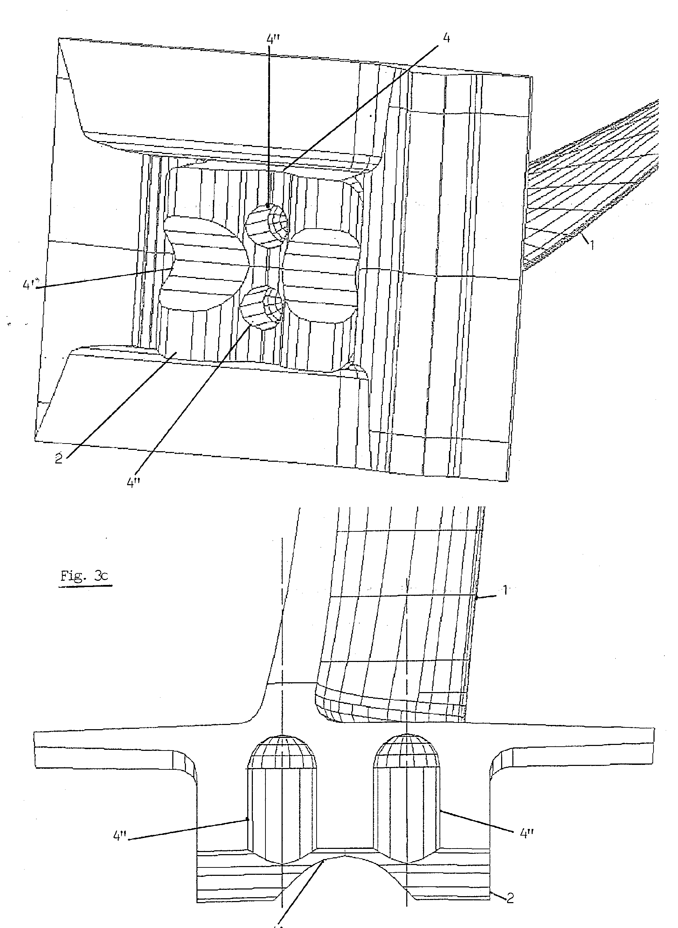

Dans le cas des compresseurs basse pression (voir Fig. 1), les séries d'aubes mobiles 1 des différents étages rotoriques successifs des compresseurs peuvent être fixées par leur plate-forme sur un seul élément rotorique appelé tambour 20, au moyen de techniques d'assemblage telles que soudage, rivetage ou boulonnage.

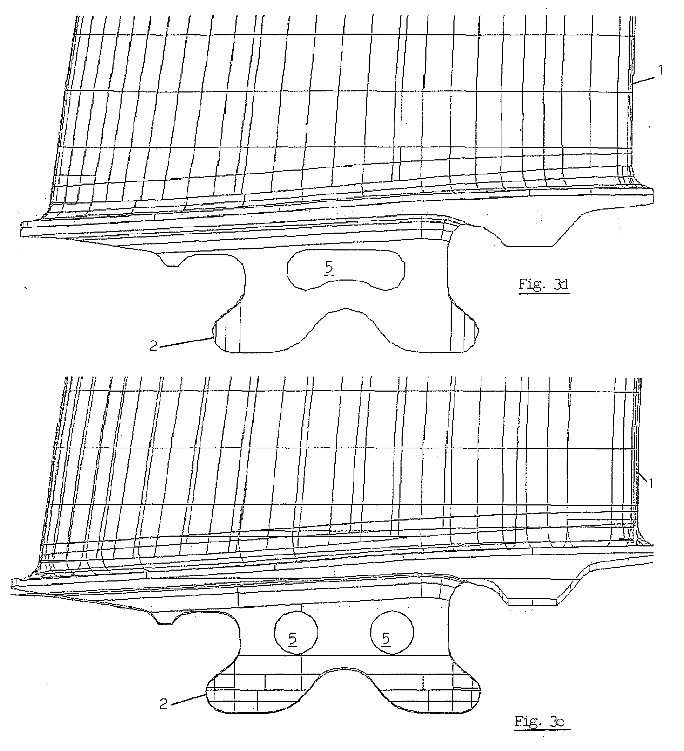

Dans une autre forme d'exécution très courante, on usine, à la périphérie dudit tambour 20, une succession de gorges qui permettent l'empilage des pieds des aubes mobiles des différents étages rotoriques. Chaque aube 1 est donc fixée dans son alvéole au moyen d'un pied 2 généralement en forme d'"attache-marteau" ou "queue d'aronde" (voir Fig. 2). L'assemblage peut être facilité en utilisant un tambour constitué d'une succession de couronnes entre lesquelles sont fixées les aubes mobiles.

Classiquement, les pieds d'aube peuvent être réalisés, soit sous une forme très massive n'impliquant aucune difficulté d'usinage, soit sous une forme plus légère, mais impliquant des usinages tant complexes que coûteux.

Lors de la rotation du tambour, les aubes mobiles sont soumises à un effort centrifuge qui, dans un cas extrême, peut conduire à l'arrachage des aubes. Les contraintes sur les aubes en rotation sont proportionnelles au poids de celles-ci, ce qui pose le problème de la durée de vie des compresseurs. La possibilité de réalisation d'aubes plus légères permettrait avantageusement, soit de réduire les contraintes sur les aubes mobiles, donc d'augmenter leur durée de vie, soit d'adopter un dessin simplifié de ces aubes.

### Buts de l'invention

La présente invention vise à fournir des aubes mobiles allégées.

L'invention vise également à fournir des disques ou tambours portant ces aubes, qui soient par conséquent allégés.

L'invention a enfin pour but, à masse égale par rapport aux aubes de l'état de la technique, de fournir des aubes mobiles qui conduisent à une augmentation de la durée de vie de ces disques et tambours.

### Principaux éléments caractéristiques de l'invention

La présente invention concerne une aube mobile allégée dans la masse et disposée au moyen d'un pied sur une couronne rotorique appartenant à un tambour de turbocompresseur, caractérisée en ce que l'allègement résulte de l'usinage de trous, rainures ou évidements dans le pied d'une aube pleine.

Ces aubes mobiles allégées sont destinées à être utilisées dans des étages rotoriques de turbocompresseurs, de préférence dans les moteurs à simple et double corps, les turboréacteurs, les turbosoufflantes, les turbopropulseurs dans le secteur aéronautique. La position et la forme des trous, rainures ou évidements susmentionnés sont calculées de manière à affecter uniquement des zones peu sollicitées de l'aube en fonctionnement.

Selon une première forme d'exécution préférée de l'invention, le pied de ladite aube comporte un trou borgne essentiellement cylindrique usiné dans la masse perpendiculairement à l'axe de révolution de la couronne, de manière radiale.

Selon une deuxième forme d'exécution préférée de l'invention, le pied de ladite aube comporte une rainure essentiellement cylindrique usinée dans la masse perpendiculairement à la direction radiale.

Avantageusement, le pied de ladite aube comporte deux rainures essentiellement cylindriques, perpendiculaires entre elles.

Selon une troisième forme d'exécution préférée de l'invention, le pied de ladite aube comporte un trou débouchant ou une lumière, localisé(e) perpendiculairement à la direction radiale et parallèlement à la direction de rotation de l'aube.

De préférence, ledit trou débouchant est circulaire ou oblong.

### Brève description des figures

La figure 1, déjà mentionnée ci-dessus, représente une vue en section axiale d'un compresseur basse pression pour moteur aéronautique réalisé selon l'état de la technique.

La figure 2, déjà mentionnée ci-dessus, représente une vue de détail en section axiale d'une aube mobile particulière du compresseur de la figure 1.

Les figures 3.a à 3.c (vue en perspective et en coupe), 3.d et 3.e (vue en coupe) montrent des formes d'exécution particulière d'aubes mobiles pour compresseur basse pression, selon la nouvelle invention.

### Description d'une forme d'exécution préférée de l'invention

La présente invention consiste à proposer de nouvelles aubes mobiles allégées par enlèvement de matière dans des zones peu sollicitées des aubes 1, telles que les pieds 2 de ces aubes.

Ainsi, d'une part, l'aube peut présenter un ou plusieurs usinages réalisés suivant un axe parallèle ou un axe perpendiculaire, horizontal ou vertical, à l'axe moteur, c'est-à-dire à l'axe du tambour (Figures 3.a, 3.b et 3.c). Par exemple, on peut avantageusement usiner le pied 2 de l'aube de manière à y réaliser au moins une rainure essentiellement cylindrique, de préférence deux rainures cylindriques perpendiculaires, 4,4' (Fig. 3.a), ainsi qu'au moins un trou borgne 4" (Fig. 3.b), de préférence deux trous borgnes 4" (Fig. 3.c), dans la masse du pied 2 de l'aube. Selon la forme d'exécution envisagée, le ou les trous borgnes 4" sont disposés radialement.

Les rainures 4,4' sont disposées selon la direction de déplacement de l'aube et/ou dans la direction perpendiculaire à celle-ci.(Fig. 3.a à 3.c).

D'autre part, l'aube peut présenter une ou plusieurs lumières 5 la traversant selon la direction de déplacement de l'aube (Figures 3.d et 3.e). Ces lumières se présentent sous la forme d'alésages cylindriques ou allongés, débouchants, réalisés sur l'épaisseur du pied d'aube.

La présente invention a pour avantage de fournir des aubes mobiles allégées de manière très simple donc peu coûteuse, ne présentant aucun dessin particulier et sans influencer de manière significative les contraintes maximales sur ces aubes ainsi que les contacts des faces de pression.

## Revendications

1. Aube mobile (1) allégée dans la masse et disposée au moyen d'un pied (2) sur une couronne rotorique appartenant à un tambour de turbocompresseur (20), **caractérisée en ce que** l'allègement résulte de l'usinage de trous, rainures ou évidements (4,4',4",5) dans le pied d'une aube pleine .

2. Aube selon la revendication 1, **caractérisée en ce que** le pied (2) de ladite aube comporte un trou borgne essentiellement cylindrique (4") usiné dans la masse perpendiculairement à l'axe de révolution de la couronne, de manière radiale.

3. Aube selon la revendication 1 ou 2, **caractérisée en ce que** le pied (2) de ladite aube comporte une rainure essentiellement cylindrique (4,4') usinée dans la masse perpendiculairement à la direction radiale.

4. Aube selon la revendication 3, **caractérisée en ce que** le pied (2) de ladite aube comporte deux rainures essentiellement cylindriques (4,4'), perpendiculaires entre elles.

5. Aube selon la revendication 1, 2 ou 3, **caractérisée en ce que** le pied (2) de ladite aube comporte un trou débouchant ou une lumière (5), localisé(e) perpendiculairement à la direction radiale et parallèlement à la direction de rotation de l'aube.

6. Aube selon la revendication 7, **caractérisée en ce que** ledit trou débouchant (5) est circulaire ou oblong.

7. Utilisation d'aubes mobiles allégées, selon l'une quelconque des revendications précédentes, dans des étages rotoriques de turbocompresseurs, de préférence dans les moteurs à simple et double corps, les turboréacteurs, les turbosoufflantes, les turbopropulseurs dans le secteur aéronautique.
